# EUROPEAN PATENT SPECIFICATION

(11) **EP 3 988 258 B1**
(45) Date of publication and mention of the grant of the patent: **15.01.2025**
(21) Application number: 20883029.9
(22) Date of filing: 17.02.2020
(51) Int. Cl.: B25J 9/00, B25J 9/10, A61H 1/02

(54) **HUMAN BODY SUPPORTING DEVICE**
KÖRPERSTÜTZVORRICHTUNG
DISPOSITIF DE SUPPORT DE CORPS HUMAIN

(30) Priority: 31.10.2019 JP 2019199071
(43) Date of publication of application: 27.04.2022
(73) Proprietor: Innophys Co., Ltd., Tokyo 162-0825 (JP)
(72) Inventor: KOBAYASHI, Hiroshi, Tokyo 162-0825 (JP)
(74) Representative: Grünecker Patent- und Rechtsanwälte PartG mbB
(86) International application number: PCT/JP2020/005977
(87) International publication number: WO 2021/084767

(56) References cited:
- EP-A1- 3 545 933
- JP-A- 2017 093 505
- JP-A- 2017 093 505
- JP-A- 2018 199 209
- INNOPHYS: "The launch of the Muscle Suit Every, an assistive suit in the 100,000 Yens range, was announced", 24 September 2019 (2019-09-24), XP055946648, Retrieved from the Internet <URL:https://innophys.jp/wp-content/uploads/2019/09/9f309798b4b7bed168cbe88e27b8dbd3-1.pdf> [retrieved on 20220727]
- ANONYMOUS: "Further expanding the usage scene by developing three models- starting selling the lastest model of the "MUSCLE SUIT" series which is useful in heathy labor fields", TOKYO UNIVERSITY OF SCIENCE- INFORMATION FOR PRESS RELEASE AND EXPERIENCE SESSION, 23 August 2018 (2018-08-23), JP, pages 1 - 4, XP009533070

## Description

### TECHNICAL FIELD

The present invention relates to a human body supporting exoskeleton device.

### BACKGROUND ART

An apparatus for supporting human hip exoskeleton as a human body supporting exoskeleton device using artificial muscles is conventionally known (see, for example, Patent Document 1). Further documents disclosing such devices include: Japanese Patent Application No. JP 2017-93505 A and Innophys Launch announcement of the "Muscle Suit Every" dated 2019-09-24 (Retrieved on 2022-07-27 from the Internet: https://innophys.jp/wp-content/uploads/2019/09/9f309798b4b7bed168cbe88e27b8dbd3-1.pdf). An apparatus for supporting human hip exoskeleton has a back frame which is tiltably attached to a pair of left and right side parts located on sides of user's hips and which is mounted to the user's back. The apparatus for supporting human hip exoskeleton also has a lower limb frame which is tiltably attached to a pair of left and right side parts and to which thigh plates to be placed in contact with the thighs of the user are fixed. The apparatus for supporting human hip exoskeleton also includes artificial muscles each having one end engaged on the back frame and the other end engaged on the lower limb frame through a wire. Compressed air from inside the compressor or tank is supplied into the artificial muscles through tubes, which causes the artificial muscles to contract. This gives an upright support force to the user's upper body (an urging force in a direction in which the human body is heaved upright), and makes it possible to reduce the load on the hips of the user lifting a heavy object.

Patent Document 1: Japanese Unexamined Patent Application, Publication No. 2013-75078

### DISCLOSURE OF THE INVENTION

### Problems to be Solved by the Invention

Conventional human body supporting devices have many parts and are therefore heavy in weight. For this reason, even if the urging force in the direction in which the human body is heaved upright is increased, it is difficult to reduce the weight of the human body supporting device the user of the human body supporting device feels, preventing the user from gaining a light fit.

An object of the present invention is to provide a human body supporting exoskeleton device that is made lighter in its weight that the user feels, enables the user to gain a light fit, and is manufactured at lower cost to achieve an affordable price for users.

### Means for Solving the Problems

The present invention relates to a human body supporting exoskeleton device comprising: a pair of left and right base sections that have a first axis corresponding to a leg axis of a human body and a second axis corresponding to a hip axis of the human body, respectively, and have a wire guide at each of the first axis and the second axis; an upper body mounting section that supports the pair of left and right base sections, is located along the upper body of the user at the back of the user, and is tiltably attached to the base sections; leg mounting sections that are mounted on the legs of the user and tiltably attached to the pair of left and right base sections; a hip belt that is connected to the base sections and mounted to a site near the pelvis of the human body; and a pair of left and right actuator containers that are located in the upper body mounting section and contain respective actuators; the actuators contained in the actuator containers; and a pair of left and right wires that are each provided between the corresponding actuator and the corresponding leg mounting section, the left and right wires being guided by the wire guides to pull the leg mounting sections toward the actuators by driving of the actuators so that the upper body mounting section is tilted toward the base sections and the leg mounting sections are tilted toward the base sections, thereby propagating an urging force in a direction in which the human body is heaved upright to the human body via the upper body mounting section and the leg mounting sections, wherein the upper body mounting section has an upper body frame that consists of one component located in an upper part of the human body supporting exoskeleton device, has the actuator containers, and is directly connected to the pair of left and right base sections, wherein the hip belt comprises: an upper hip belt that connects upper parts of target fixation parts respectively fixed to the pair of left and right base sections and is located above an upper part of a gluteus maximus of the human a length of the upper hip belt is fixed, and a length of the lower hip belt is adjustable and wherein a ratio of the urging force in a direction in which the user is heaved upright to the weight of the human body supporting exoskeleton device is 6 kgf/kg or more.

body, and a lower hip belt that connects lower parts of the target fixation parts and is located adjacent to a lower part of a rear part of the gluteus maximus of the human body, wherein

Further, the upper body frame preferably has an inverted V-shape with an apex in the center, and ends of upper body mounting belts to be mounted to left and right shoulders of the human body, respectively, are preferably engaged on the apex.

Further, in an initial state where the human body supporting exoskeleton device is mounted to the human body, settings for the actuators are preferably made so that the upper body mounting section is inclined with respect to the base sections, from the position of the hips of the human body upwardly and away from the back of the human body. Further, the upper body frame is preferably integrally molded with resin. An adjuster capable of adjusting the urging force from the actuators is preferably comprised.

### Effects of the Invention

An object of the present invention is to provide a human body supporting exoskeleton device that is made lighter in its weight that the user feels, enables the user to gain a light fit, and is manufactured at lower cost to achieve an affordable price for users.

### BRIEF DESCRIPTION OF THE DRAWINGS

FIG. 1 is a side view of a human body supporting exoskeleton device according to an embodiment of the present invention;
FIG. 2 is a rear view of the human body supporting exoskeleton device according to the embodiment of the present invention;
FIG. 3 is a rear view of the human body supporting exoskeleton device according to the embodiment of the present invention, from which a cover, a hip belt, and an upper hip belt have been removed;
FIG. 4 is a front view of the human body supporting exoskeleton device according to the embodiment of the present invention, from which the cover, the hip belt, and the upper hip belt have been removed;
FIG. 5 is a side view of the human body supporting exoskeleton device according to the embodiment of the present invention, from which the cover, the hip belt, and the upper hip belt have been removed; and
FIG. 6 is a side view of the human body supporting exoskeleton device according to the embodiment of the present invention, being used by the user.

### PREFERRED MODE FOR CARRYING OUT THE INVENTION

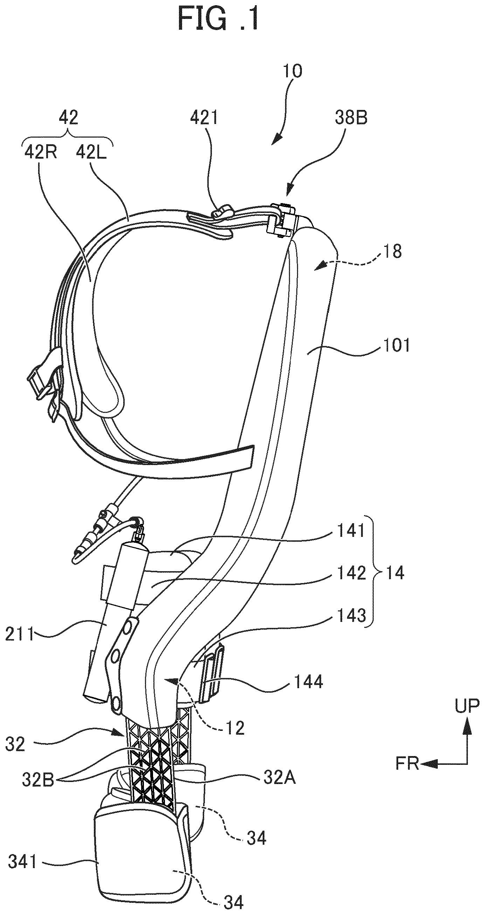

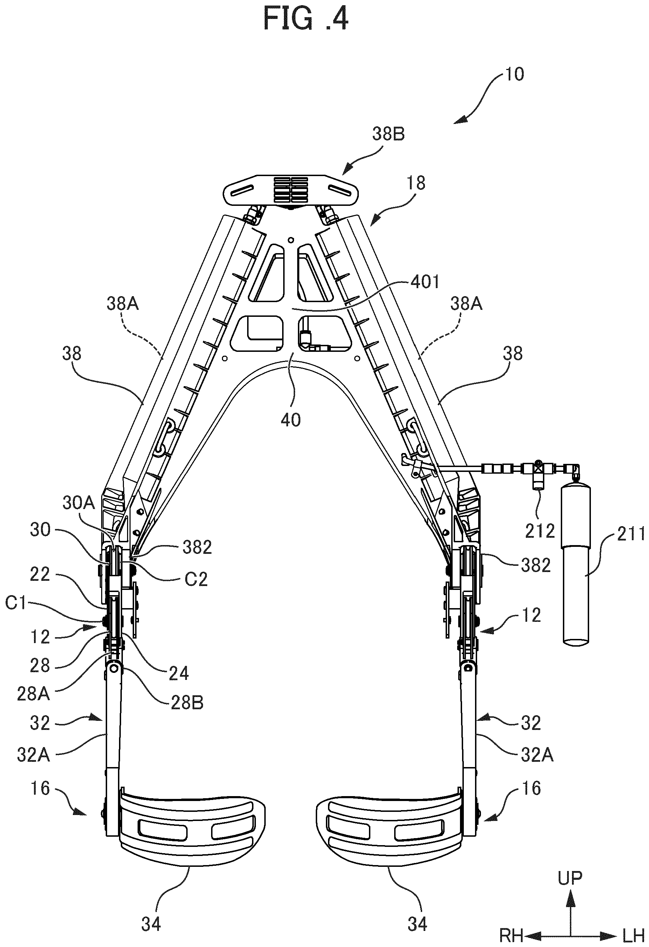

A human body supporting exoskeleton device according to an embodiment of the present invention will be described with reference to FIGS. 1 to 6. In the following description, the front side defined with respect to the front-back direction as seen from the user in an upright position while wearing the human body supporting exoskeleton device is indicated by the arrow FR, the right side and the left side are indicated by the arrows RH and LH, respectively, and the upper side defined with respect to the up-down direction is indicated by the arrow UP. In the following description, simply indicated directions, such as front and back, left and right, and up and down, indicate the front and back, left and right, and up and down as seen from the user in an upright position wearing the human body supporting exoskeleton device.

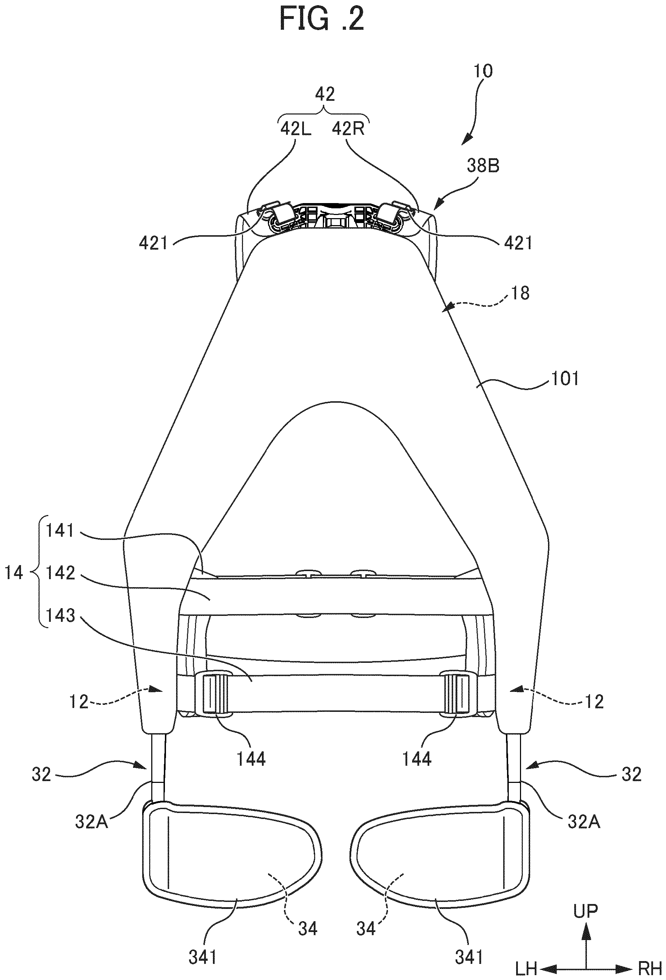

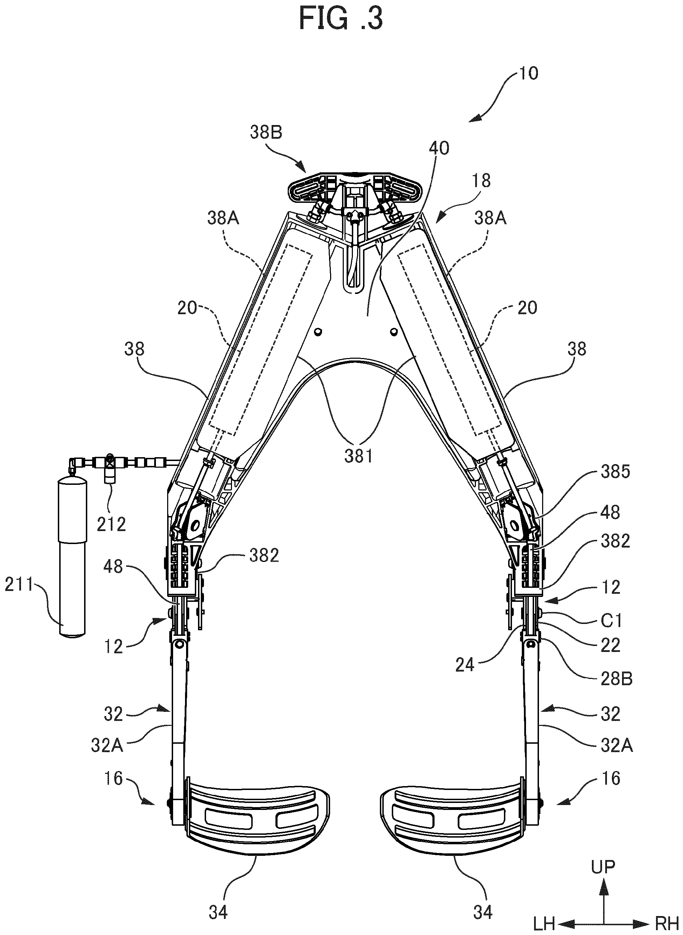

As shown in FIGS. 2 and 3, the human body supporting exoskeleton device 10 includes a pair of left and right base sections 12 that are located on the sides of the user's hips, a hip belt 14 that is attached to the base sections 12 and is mounted around the user's hip (near the pelvis), an upper body frame 18 as an upper body mounting section for supporting the pair of left and right base sections 12, thigh arms 16 as leg mounting sections tiltably attached to the pair of left and right base sections 12, and artificial muscles 20 contained in the upper body frame 18. The base sections 12 and the upper body frame 18 are covered by the cover 101.

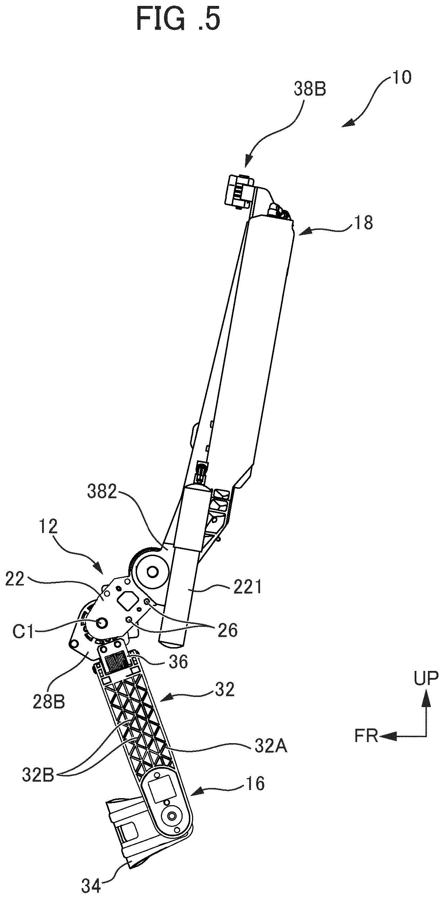

The base sections 12 each include a plate-like outer plate 22 and inner plate 24. The outer plate 22 and the inner plate 24 have an almost the same shape in a side view (when viewed from the right or left side). The outer plate 22 and the inner plate 24 are connected through multiple connection pins 26 (see FIG. 5), or the like and are arranged in parallel at predetermined intervals in the left-right direction.

A first pulley 28 and a second pulley 30 as wire guides are rotatably supported between the outer plate 22 and the inner plate 24. The first pulley 28 is attached below the outer plate 22 and the inner plate 24 so that its rotation axis is oriented in the left-right direction. The rotation axis of the first pulley 28 is a first axis C1 corresponding to a hip joint as the leg axis of the user. In addition, the first pulley 28 has a wire engagement section 28A on which a portion of a wire 48 to be described below is engaged, and a thigh arm 16 to be described below, attached thereto and is provided with a thigh arm attachment section 28B which can be rotated centered about the first axis C1.

The second pulley 30 is attached to the upper part of the outer plate 22 and the inner plate 24 and behind the first pulley 28 so that its rotation axis is oriented in the leftright direction. The rotation axis of the second pulley 30 is a second axis C2 corresponding to a sacroiliac joint as the hip axis of the user. In addition, a guide channel 30A is formed in the outer periphery of the second pulley 30 for guiding a middle portion of the wire 48 defined with respect to the longitudinal direction described below. The parts corresponding to the outer plate 22 and the inner plate 24 that support the second pulley 30 constitute a target connection part to be attached to the upper body frame 18.

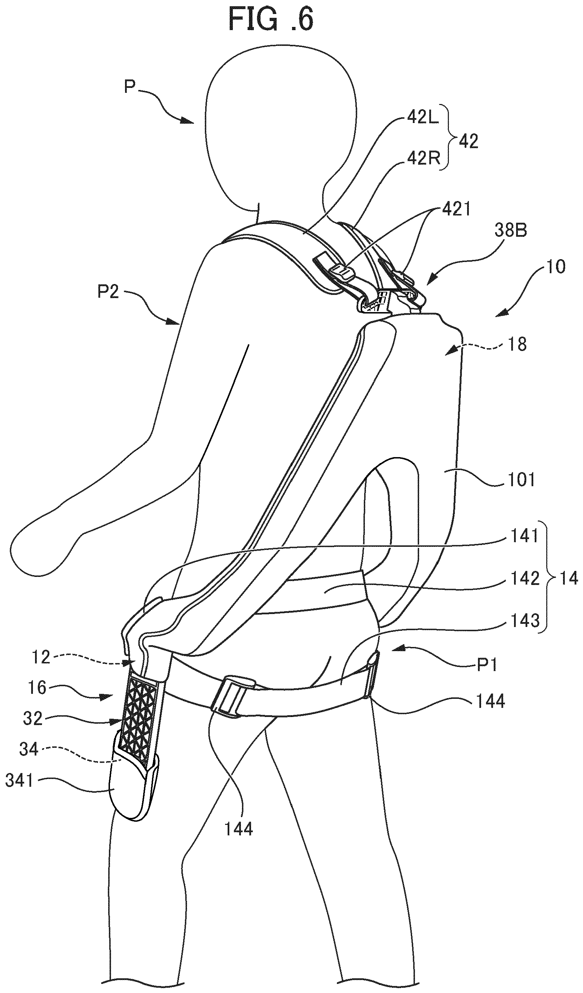

The hip belt 14 has base pads 141 as target fixation parts, an upper hip belt 142, and a lower hip belt 143. Each base pad 141 is fixed to the inner plate 24 of the base section 12 so that it is positioned in parallel with the inner plate 24. Both ends of the upper hip belt 142 are fixed to upper parts of the base pads 141 in such a manner that it is non-adjustable in length. Hence, the upper hip belt 142 connects the upper parts of the base pads 141 together, and the length of the upper hip belt 142 is fixed. The upper hip belt 142, which has a fixed length in this way, is located above the upper part of the gluteus maximus of the user P, as shown in FIG. 6.

Both ends of the lower hip belt 143 are fixed to lower parts of the base pads 141 in such a manner that it is adjustable in length. Hence, the lower hip belt 143 connects the lower parts of the base pads 141 together. A buckle 144 is provided near each of the both ends of the lower hip belt 143, and the length of the lower hip belt 143 is adjustable at the buckles 144. The length of the lower hip belt 143 is designed to be adjusted so that the lower hip belt 143 is located adjacent to, but behind and below the gluteus maximus of the user P.

As shown in FIGS. 2 to 4, each thigh arm 16 has an arm body 32 extending along a thigh of the user P, and a thigh pad 34 attached to the arm body 32 and covered by a cover 341. The arm body 32 has an extension 32A provided with ribs 32B for increasing rigidity, and the base of the extension 32A is attached to the thigh arm attachment section 28B through a hinge 36 that is pivotable about an axis that is oriented approximately in the front-back direction with respect to the thigh arm attachment section 28B. The hinge 36 is configured to be pivotable in the left-right direction, making the thigh arm 16 tiltable in the left-right direction with respect to the base section 12.

Each thigh pad 34 to be mounted on a leg of the user P is fixed to the end of the extension 32A. The thigh pad 34 is formed in a curved shape that follows the front surface of the thigh of the user P. The thigh pad 34 is supported so that it is pivotable at a predetermined angle with respect to the arm body 32 about an axis that is oriented in the left-right direction. This allows the thigh pad 34 to be in proper contact with the front surface of the thigh of the user P.

As shown in FIG. 3, the upper body frame 18 is located in the upper part of the human body supporting exoskeleton device 10, and has an inverted V-shape that is open on the lower side and has an apex in the center in a front view (when viewed from the front side of the user P). The upper body frame 18 includes a pair of artificial muscle attachment sections 38 positioned at a predetermined interval in the left-right direction and each including an artificial muscle container 38A as an actuator container to contain McKibben-type artificial muscles 20 as actuators; and a connection portion 40 which connects the upper portions of the pair of artificial muscle attachment sections 38 in the left-right direction. These consist of one part made of resin integrally molded by injection molding.

The left and right lower ends of the upper body frame 18 have base section attachment parts 382 in a cornered U-shape that is open downward. A target connection part consisting of the outer plate 22 and the inner plate 24 that support the second pulley 30 is located between the base section attachment parts 382. Each base section 12 is supported so that it is pivotable with respect to the base section attachment part 382. In other words, the left and right lower ends of the upper body frame 18 are directly connected to the pair of left and right base sections 12, and the upper body frame 18 is tiltably attached to the base section 12.

The pair of artificial muscle attachment sections 38 are inclined to the right and left sides of the user P, respectively, from the upper side toward the lower side in a front view. The artificial muscle attachment sections 38 each have a channel (not shown in the drawing) having a cornered Ushaped cross section and an opening on the rear side, and the portions where the channels are formed constitute the artificial muscle containers 38A, and the artificial muscles 20 are contained in the channels. The rear opening is closed by a lid 381. The connection portion 40 has a cross-shaped rib 401 and has high rigidity to connect the pair of artificial muscle attachment sections 38 together.

Each artificial muscle 20 is composed of an elastic tube (not shown in the drawings) formed in a tubular shape using an elastic material such as rubber, and a cylindrical mesh sleeve (not shown in the drawings) covering the elastic tube (not shown in the drawings), in such a manner that the mesh sleeve covers the elastic tube and both ends are caulked.

The elastic tube (not shown in the drawings) has a space to be supplied with a gas (air), and the inside of the elastic tube (not shown in the drawings) is configured to be supplied with air via a pump 211 connected through a tubular member. The tubular member is provided with an adjustment valve 212 that can adjust the amount of air supplied to the elastic tube, and the adjustment valve 212 is used to adjust the amount of air as appropriate for adjusting urging force, allowing the urging force by the artificial muscles 20 to be adjusted as appropriate depending on the situation, such as use by a senior, a woman, or other users who has lower general muscle strength, or use by a man or other users who has higher general muscle strength.

The mesh sleeve (not shown in the drawings) is formed, for example, by weaving wires of high tensile fibers or the like having small elasticity. When air is supplied into the elastic tube (not shown in the drawings) disposed in the mesh sleeve and the elastic tube expands, the dimension in the direction perpendicular to the length direction of the mesh sleeve increases and the dimension in the length direction of the mesh sleeve decreases. This configuration shortens the lengths of the artificial muscles 20 (causing the artificial muscles 20 to contract) and generate the force to support the hips and arms described below.

One end of each artificial muscle 20 is fixed to the artificial muscle attachment sections 38, and the other end of the artificial muscle 20 has a wire 48 engaged on it. Each wire 48 is derived from the lower end of the upper body frame 18, and is looped over the rear side of the pulley 385 located at the lower end of the upper body frame 18, the rear side of the second pulley 30, and the rear side of the first pulley 28 in this order and is guided by them, and the other end of the wire 48 is engaged on a wire engagement section 28A of the first pulley 28. Driving the artificial muscles 20 pulls the thigh arms 16 toward the artificial muscles 20, thereby tilting the upper body frame 18 with respect to the base section 12 and the thigh arms 16 with respect to the base section 12 and thus propagating the urging force in the direction in which the user P is heaved upright to the user P via the upper body frame 18 and the thigh arms 16.

At the position of the central apex of the inverted Vshaped upper body frame 18, an upper body mounting belt attachment portion 38B to which ends of upper body mounting belts 42 to be attached to the upper body of the user P are attached is fixed to the upper body frame 18. As shown in FIG. 6 and other drawings, the upper body mounting belts 42 include a right mounting belt 42R configured to be attached to the right shoulder of the user P, and a left mounting belt 42L configured to be attached to the left shoulder of the user P. The lengths of the right mounting belt 42R and the left mounting belt 42L are adjustable by the respective buckles 421. Of the upper body frame 18, the right mounting belt 42R is mounted to the right shoulder of the user P, and the left mounting belt 42L is mounted to the left shoulder of the user P. The part of the upper body mounting belt attachment portion 38B is positioned away from the back of the user P and is located along the upper body of the user P at the back of the user P. In other words, in the initial state where the user P wears the human body supporting exoskeleton device 10, as shown in FIG. 6, settings for the artificial muscles 20 are made so that the upper body frame 18 is inclined from the position of the hips of the user P upwardly and away from the back of the user P. In this state, even if the first axis C1 and the second axis C2 are not perfectly aligned with the leg axis and the hip axis (hip joint and sacroiliac joint) of the user P, misalignment with respect to the user P can be suppressed when the human body supporting exoskeleton device 10 is assisting the movement of the user P.

The weight of the aforementioned human body supporting exoskeleton device 10 is 4.25 kg or less, specifically, about 3.8 kg in this embodiment. In addition, the urging force (assisting force) by the human body supporting exoskeleton device 10 in the direction in which the human body is heaved upright is 25.5 kgf (100 Nm) or more. Accordingly, the ratio of the urging force in the direction in which the human body is heaved upright to the weight of the human body supporting exoskeleton device (hereinafter referred to as the "assist ratio") is 6 kgf/kg or more.

The support of the user P by the aforementioned human body supporting exoskeleton device 10 will now be described. As shown in FIG. 6, in this embodiment, the hip belt 14, the upper body mounting belts 42, and the thigh arms 16 are mounted to the hips P1, the upper body P2, and the thighs of the user P, respectively, so that the human body supporting exoskeleton device 10 is mounted to the user P.

More specifically, as shown in FIG. 6, the upper hip belt 142 of the hip belt 14 having a fixed length is located above the upper part of the gluteus maximus of the user P, that is, in a position corresponding to the position of the belt for the trousers. With reference to this position, the length of the lower hip belt 143 of the hip belt 14 is adjusted so that the lower hip belt 143 is located adjacent to the lower part of the rear part of the gluteus maximus of the user P. As a result, as shown in FIG. 6, the gluteus maximus is sandwiched between the upper hip belt 142 and the lower hip belt 143 from above and below, so that the human body supporting exoskeleton device 10 is less likely to slip out of place with respect to the human body of the user P even when the user P moves. In this state, the upper body mounting belts 42 and the thigh arms 16 are mounted to the hips P1, the upper body P2, and the thighs of the user P, respectively, and the human body supporting exoskeleton device 10 is mounted to the user P.

When the user P lifts a heavy object placed on the floor, the contraction of the artificial muscles 20 pulls the wires 48 toward the artificial muscles 20, which causes the upper body frame 18 to pivot with respect to the base section 12, generating a support force in the direction in which the upper body P2 of the user P leaning forward is heaved upright. In addition, the thigh arms 16 are made pivot with respect to the base section 12 to generate a support force in the direction in which the bent legs of the user P are straightened. This reduces the load generated on the hips P1 of the user P when the user P lifts a heavy object placed on the floor.

According to the embodiment described above, the following advantageous effects can be achieved. In this embodiment, the upper body frame 18 as an upper body mounting section is an upper body frame 18 consisting of a single component located in the upper part of the human body supporting exoskeleton device 10, and includes an upper body frame 18 having actuator containers 38 and directly connected to the pair of left and right base sections 12, and the ratio of the urging force in the direction in which the user P is heaved upright to the weight of the human body supporting exoskeleton device 10 (assist ratio) is 6 kgf/kg or more.

This configuration not only reduces the total weight of the human body supporting exoskeleton device 10, but also reduces the weight of the upper body frame 18, which is located in the upper part of the human body supporting exoskeleton device 10, thereby allowing the center of gravity of the overall human body supporting exoskeleton device 10 to be located in a lower position. This makes it possible to reduce the weight that the user P feels when wearing the human body supporting exoskeleton device 10. Besides, since fewer parts are used, the manufacturing cost for the human body supporting exoskeleton device 10 is reduced and the price of the human body supporting exoskeleton device 10 can be made affordable for the user P.

Further, the total weight of the human body supporting exoskeleton device 10 is reduced, while the urging force in the direction in which the user P is heaved upright is strong, and the ratio of the urging force in the direction in which the user P is heaved upright with respect to the weight of the human body supporting exoskeleton device 10 is 6 kgf/kg or more, so that the urging force as an assisting force is exerted from the lightweight human body supporting exoskeleton device 10, and the user P can feel lighter assistance by the human body supporting exoskeleton device 10. As a result, compared with conventional human body supporting exoskeleton devices, the user P wearing and working with the device feels more lightness and the human body supporting exoskeleton device 10 can be used more comfortably.

In addition, in this embodiment, the hip belt 14 comprises: an upper hip belt 142 that connects the upper parts of the base pads 141 as target fixation parts respectively fixed to the pair of left and right base sections 12, and is located above the upper part of the gluteus maximus of the user P, and a lower hip belt 143 that connects the lower parts of the base pads 141 and is located adjacent to the lower part of the rear part of the gluteus maximus of the user P.

With this configuration, the upper hip belt 142 is stably located in a position corresponding to the position of the belt for the trousers of the user P. The lower hip belt 143 is stably located adjacent to the lower part of the rear part of the gluteus maximus of the user P. As a result, as shown in FIG. 6, the gluteus maximus is sandwiched between the upper hip belt 142 and the lower hip belt 143 from above and below. Hence, the user P is like sitting between the upper hip belt 142 and the lower hip belt 143, so that the upper hip belt 142 and the lower hip belt 143 are less likely to slip out of place with respect to the user P, and the user P can stably use the assistance by the human body supporting exoskeleton device 10. Besides, the user P feels less heavy with the human body supporting exoskeleton device 10 due to a displacement in the weight balance caused by a misalignment.

The length of the upper hip belt 142 is fixed, and the length of the lower hip belt 143 is adjustable. With this configuration, when the user P wears the human body supporting exoskeleton device 10, while the upper hip belt 142 with a fixed length is stably placed in a position corresponding to the position of the belt for the trousers of the user P, the length of the lower hip belt 143 can be adjusted to fit in the lower part of the rear part of the gluteus maximus. Consequently, the hip belt 14 can be mounted to a site near the pelvis of the human body of the user P in the positional relationship where the gluteus maximus is sandwiched from above and below. In other words, the upper hip belt 142 and the lower hip belt 143 can be accurately located at appropriate positions (sites) of the user P. This leads to suppression of feeling heavy with the human body supporting exoskeleton device 10 or feeling uncomfortable during assistance because of an inappropriate position of the human body supporting exoskeleton device 10 with respect to the user P.

In addition, the upper body frame 18 has an inverted Vshape having an apex in the center, and ends of the upper body mounting belts 42 mounted to the respective left and right shoulders of the human body of the user P are engaged on the apex. This eliminates the need for separately providing a component extending from the upper body frame 18 for engaging the ends of the upper body mounting belts 42 thereon, and connecting it to the upper body frame 18, thereby allowing the parts count and the weight of the upper part of the human body supporting exoskeleton device 10 to be reduced.

The upper body frame 18 is integrally molded with resin. This configuration ensures a reduction in the total weight of the human body supporting exoskeleton device 10.

The present invention may be implemented in various modes within the scope of the claims, without being limited to the embodiments described above. For example, the configuration of each part of the human body supporting exoskeleton device is not limited to the configuration of each part of the human body supporting exoskeleton device 10. In other words, the configurations of the base sections, upper body mounting section, leg mounting sections, hip belt, actuator, actuator containers, wires, and the like are not limited to the configurations of the base sections 12, upper body frame 18, thigh arms 16, hip belt 14, artificial muscles 20, artificial muscle attachment section 38, wires 48, and the like of this embodiment.

### EXPLANATION OF REFERENCE NUMERALS

10 Human body supporting exoskeleton device
12 Base section
14 Hip belt
16 Thigh arm (leg mounting section)
18 Upper body frame (upper body mounting section)
20 Artificial muscle (actuator)
28 First pulley (wire guide)
30 Second pulley (wire guide)
38 Artificial muscle attachment section (actuator container)
48 Wire
141 Base pad (target fixation part)
142 Upper hip belt
143 Lower hip belt
C1 First Axis
C2 Second Axis

## Claims

1. A human body supporting exoskeleton device (10) comprising:
a pair of left and right base sections (12) that have a first axis (C1) corresponding to a leg axis of a human body and a second axis (C2) corresponding to a hip axis of the human body, respectively, and have a wire guide (28, 30) at each of the first axis (C1) and the second axis (C2);
an upper body mounting section (18) that supports the pair of left and right base sections (12), is located along the upper body of the user at a back of the user, and is tiltably attached to the base sections (12);
leg mounting sections (16) that are mounted on legs of the user and tiltably attached to the pair of left and right base sections (12);
a hip belt (14) that is connected to the base sections (12) and mounted to a site near a pelvis of the human body; a pair of left and right actuator containers (38) that are located in the upper body mounting section (18) and contain respective actuators (20); the actuators (20) contained in the actuator containers (38); and
a pair of left and right wires (48) that are each provided between the corresponding actuator (20) and the corresponding leg mounting section (16), the left and right wires (48) being guided by the wire guides (28, 30) to pull the leg mounting sections (16) toward the actuators (20) by driving of the actuators (20) so that the upper body mounting section (18) is tilted toward the base sections (12) and the leg mounting sections (16) are tilted toward the base sections (12), thereby propagating an urging force in a direction in which the human body is heaved upright to the human body via the upper body mounting section (18) and the leg mounting sections (16), wherein
the upper body mounting section (18) has an upper body frame (18) that includes one component located in an upper part of the human body supporting exoskeleton device (10), has the actuator containers (38), and is directly connected to the pair of left and right base sections (12), **characterized in that** the hip belt (14) comprises: an upper hip belt (14) that connects upper parts of target fixation parts (141) respectively fixed to the pair of left and right base sections (12) and is located above an upper part of a gluteus maximus of the human body, and a lower hip belt (14) that connects lower parts of the target fixation parts (141) and is located adjacent to a lower part of a rear part of the gluteus maximus of the human body, wherein a length of the upper hip belt (14) is fixed, and a length of the lower hip belt (14) is adjustable, and **further characterized in that** a ratio of the urging force in a direction in which the user is heaved upright to the weight of the human body supporting exoskeleton device (10) is 6 kgf/kg or more.

2. The human body supporting exoskeleton device (10) according to claim 1, wherein
the upper body frame (18) has an inverted V-shape with an apex in the center, and
ends of upper body mounting belts (42) to be mounted to left and right shoulders of the human body, respectively, are engaged on the apex.

3. The human body supporting exoskeleton device (10) according to Claim 1 or 2, wherein in an initial state where the human body supporting exoskeleton device (10) is mounted to the human body, settings for the actuators (20) are made so that the upper body mounting section (18) is inclined with respect to the base sections (12), from a position of a hip of the human body upwardly and away from the back of the human body.

4. The human body supporting exoskeleton device (10) according to any one of Claims 1 to 3, wherein the upper body frame (18) is integrally molded with resin.

5. The human body supporting exoskeleton device (10) according to any one of Claims 1 to 4, further comprising an adjuster (211, 212) capable of adjusting the urging force from the actuators (20).

## Patentansprüche

1. Den menschlichen Körper unterstützende Exoskelettvorrichtung (10), welche umfasst:
ein Paar linker und rechter Basisabschnitte (12), die eine erste Achse (C1), die einer Beinachse eines menschlichen Körpers entspricht, beziehungsweise eine zweite Achse (C2), die einer Hüftachse des menschlichen Körpers entspricht, und eine Drahtführung (28, 30) an jeder der ersten Achse (C1) und der zweiten Achse (C2) aufweisen,
einen Oberkörperbefestigungsabschnitt (18), der das Paar aus linkem und rechtem Basisabschnitt (12) trägt, entlang des Oberkörpers des Benutzers an einem Rücken des Benutzers angeordnet ist und schwenkbar an den Basisabschnitten (12) angebracht ist,
Beinbefestigungsabschnitte (16), die an den Beinen des Benutzers angebracht sind und schwenkbar an dem Paar aus linkem und rechtem Basisabschnitt (12) befestigt sind,
einen Hüftgurt (14), der mit den Basisabschnitten (12) verbunden ist und an einer Stelle in der Nähe eines Beckens des menschlichen Körpers angebracht ist, ein Paar von linken und rechten Aktuatorbehältern (38), die in dem Oberkörperbefestigungsabschnitt (18) angeordnet sind und jeweilige Aktuatoren (20) enthalten, wobei die Aktuatoren (20) in den Aktuatorbehältern (38) enthalten sind, und
ein Paar von linken und rechten Drähten (48), die jeweils zwischen dem entsprechenden Aktuator (20) und dem entsprechenden Beinbefestigungsabschnitt (16) vorgesehen sind, wobei die linken und rechten Drähte (48) durch die Drahtführungen (28, 30) geführt werden, um die Beinbefestigungsabschnitte (16) durch Antreiben der Aktuatoren (20) zu den Aktuatoren (20) hin zu ziehen, so dass der Oberkörperbefestigungsabschnitt (18) zu den Basisabschnitten (12) hin geschwenkt wird und die Beinbefestigungsabschnitte (16) zu den Basisabschnitten (12) hin geschwenkt werden, wodurch eine Druckkraft in eine Richtung übertragen wird, in welcher der menschliche Körper über den Oberkörperbefestigungsabschnitt (18) und die Beinbefestigungsabschnitte (16) auf den menschlichen Körper aufrecht gehoben wird, wobei
der Oberkörperbefestigungsabschnitt (18) einen Oberkörperrahmen (18) aufweist, welcher eine Komponente umfasst, welche in einem oberen Teil der den menschlichen Körper stützenden Exoskelettvorrichtung (10) angeordnet ist, die Aktuatorbehälter (38) aufweist und direkt mit dem Paar von linken und rechten Basisabschnitten (12) verbunden ist, **dadurch gekennzeichnet, dass** der Hüftgurt (14) umfasst: einen oberen Hüftgurt (14), der obere Teile von Zielbefestigungsteilen (141) verbindet, die jeweils an dem Paar von linken und rechten Basisabschnitten (12) befestigt sind, und der oberhalb eines oberen Teils eines Glutaeus maximus des menschlichen Körpers angeordnet ist, und einen unteren Hüftgurt (14), der untere Teile der Zielbefestigungsteile (141) verbindet und der benachbart zu einem unteren Teil eines hinteren Teils des Glutaeus maximus des menschlichen Körpers angeordnet ist, wobei eine Länge des oberen Hüftgurtes (14) fest ist und eine Länge des unteren Hüftgurtes (14) einstellbar ist, und ferner **dadurch gekennzeichnet, dass** ein Verhältnis der Druckkraft in einer Richtung, in der der Benutzer aufrecht gehalten wird, zu dem Gewicht der den menschlichen Körper unterstützenden Exoskelettvorrichtung (10) 6 kgf/kg oder mehr beträgt.

2. Den menschlichen Körper unterstützende Exoskelettvorrichtung (10) gemäß Anspruch 1, wobei
der Oberkörperrahmen (18) eine umgekehrte V-Form mit einem Scheitelpunkt in der Mitte hat, und
die Enden der Oberkörperbefestigungsgurte (42), die an der linken beziehungsweise rechten Schulter des menschlichen Körpers zu befestigen sind, an dem Scheitelpunkt angreifen.

3. Den menschlichen Körper unterstützende Exoskelettvorrichtung (10) gemäß Anspruch 1 oder 2, wobei in einem anfänglichen Zustand, in dem die den menschlichen Körper stützende Exoskelettvorrichtung (10) an dem menschlichen Körper angebracht ist, Einstellungen für die Aktuatoren (20) so vorgenommen werden, dass der Oberkörperbefestigungsabschnitt (18) in Bezug auf die Basisabschnitte (12) von einer Position einer Hüfte des menschlichen Körpers nach oben und weg von dem Rücken des menschlichen Körpers geneigt ist.

4. Den menschlichen Körper unterstützende Exoskelettvorrichtung (10) gemäß einem der Ansprüche 1 bis 3, wobei der Oberkörperrahmen (18) in einem Stück mit Harz gegossen ist.

5. Den menschlichen Körper unterstützende Exoskelettvorrichtung (10) gemäß einem der Ansprüche 1 bis 4, die ferner eine Einstellvorrichtung (211, 212) umfasst, welche in der Lage ist, die Druckkraft von den Aktuatoren (20) einzustellen.

## Revendications

1. Dispositif exosquelette de support de corps humain (10) comprenant :
une paire de sections de base gauche et droite (12) qui présentent un premier axe (C1) correspondant à l'axe de la jambe d'un corps humain et un second axe (C2) correspondant à l'axe de la hanche du corps humain, respectivement, et qui présentent un guide-fil (28, 30) à chacun du premier axe (C1) et du second axe (C2) ;
une section de montage de la partie supérieure du corps (18) qui supporte la paire de sections de base gauche et droite (12), est située le long de la partie supérieure du corps de l'utilisateur à l'arrière de celui-ci, et est fixée de manière inclinable aux sections de base (12) ;
des sections de montage des jambes (16) qui sont montées sur les jambes de l'utilisateur et fixées de manière inclinable à la paire de sections de base gauche et droite (12) ;
une ceinture de hanche (14) reliée aux sections de base (12) et montée sur un site proche du bassin du corps humain ; une paire de logements d'actionneurs gauche et droit (38) situés dans la section de montage du haut du corps (18) et contenant des actionneurs respectifs (20) ; les actionneurs (20) contenus dans les logements d'actionneurs (38) ; et
une paire de fils gauche et droit (48) qui sont chacun prévus entre l'actionneur correspondant (20) et la section de montage de jambe correspondante (16), les fils gauche et droit (48) étant guidés par les guides de fils (28, 30) pour tirer les sections de montage des jambes (16) vers les actionneurs (20) en entraînant les actionneurs (20) de sorte que la section de montage du haut du corps (18) est inclinée vers les sections de base (12) et que les sections de montage des jambes (16) sont inclinées vers les sections de base (12), propageant ainsi une force de poussée dans une direction dans laquelle le corps humain est soulevé vers le haut par la section de montage du haut du corps (18) et les sections de montage des jambes (16), dans laquelle
la section de montage de la partie supérieure du corps (18) comporte un cadre de la partie supérieure du corps (18) qui comprend un composant situé dans une partie supérieure du dispositif d'exosquelette de support du corps humain (10), comporte les logements d'actionneur (38) et est directement reliée à la paire de sections de base gauche et droite (12),
**caractérisé en ce que** la ceinture de hanche (14) comprend : une ceinture de hanche supérieure (14) qui relie les parties supérieures des pièces de fixation de la cible (141) respectivement fixées à la paire de sections de base gauche et droite (12) et qui est située au-dessus d'une partie supérieure d'un fessier du corps humain, et une ceinture de hanche inférieure (14) qui relie les parties inférieures des pièces de fixation de la cible (141) et est situé à proximité d'une partie inférieure de la partie arrière du grand fessier du corps humain, dans lequel une longueur de la ceinture de hanche supérieure (14) est fixe et une longueur de la ceinture de hanche inférieure (14) est réglable,
et **caractérisé en outre en ce qu'**un rapport de la force de poussée dans une direction dans laquelle l'utilisateur est soulevé jusqu'à ce que le poids du dispositif exosquelette de support de corps humain (10) soit égal ou supérieur à 6 kgf/kg.

2. Dispositif exosquelette de support de corps humain (10) selon la revendication 1, dans lequel le cadre supérieur du corps (18) est en forme de V inversé avec un sommet au centre, et les extrémités des ceintures de montage du corps supérieur (42) à monter sur les épaules gauche et droite du corps humain, respectivement, sont engagées sur le sommet.

3. Dispositif d'exosquelette de support de corps humain (10) selon les revendications 1 ou 2, dans lequel, dans un état initial où le dispositif d'exosquelette de support de corps humain (10) est monté sur le corps humain, les réglages des actionneurs (20) sont effectués de manière à ce que la section de montage de la partie supérieure du corps (18) soit inclinée par rapport aux sections de base (12), à partir d'une position de la hanche dirigée vers le haut et à l'écart du dos du corps humain.

4. Dispositif exosquelette (10) de support de corps humain selon l'une des revendications 1 à 3, dans lequel le cadre supérieur du corps (18) est intégralement moulé avec de la résine.

5. Dispositif exosquelette de support de corps humain (10) selon l'une des revendications 1 à 4, comprenant en outre un dispositif de réglage (211, 212) capable d'ajuster la force de poussée des actionneurs (20).
